# EUROPEAN PATENT APPLICATION

(11) **EP 2 040 212 A1**
(43) Date of publication of application: **25.03.2009**
(21) Application number: 08014474.4
(22) Date of filing: 14.08.2008
(51) Int. Cl.: G06Q 30/00

(54) **Introducing preferences over NFPs into service selection in SOA**

(30) Priority: 30.08.2007 IL 18563307
(71) Applicant: Deutsche Telekom AG, 53113 Bonn (DE)
(72) Inventor: Shimony, Eyal Shlomo, Lehavim 85338 (IL); Binshtok, Max, Ashdod 77401 (IL); Dayan, Aviram, Beersheva (IL); Brafman, Ronen, Ramot Meir 76832 (IL); Schröpfer, Christian, Berlin 10785 (DE); Offermann, Philipp, Berlin 10777 (DE); Holschke, Oliver, Berlin 12203 (DE)
(74) Representative: Flaccus, Rolf-Dieter

(57) **Abstract**

The invention is a method for optimizing a business or software activity in service-oriented architecture. The method provides a match between the required functionality and that provided by a web service (or other service) while taking into account client requirements and allowing tradeoffs. The method comprises the steps of: specifying a user's preferences over the service configuration using a structural representation and optimizing the service configuration according to the representation.

## Description

### Field of the Invention

The invention relates to the field of computer implemented methods of matching business activities or system functionality with services requested by customers.

### Background of the Invention

Publications and other reference materials referred to herein, including reference cited therein, are incorporated herein by reference in their entirety and are numerically referenced in the following text and respectively grouped in the appended Bibliography, which immediately precedes the claims. A listing of the abbreviations that appear herein is found in the appended List of Abbreviations, which immediately precedes the Bibliography.

Scientists and practitioners emphasize the potential of SOA (Service-Oriented Architecture) especially by reconciling business requirements and IT (Information Technology) infrastructures. SOA definitions range from a solely technology-driven approach to a new management school approach on how to run the whole enterprise. Taking these definitions together, it becomes clear that a proper description of services is a fundamental precondition for a functioning SOA. Several advantages of SOA, like agility, fast implementation times, cost efficiency, high software quality, and good functional support of needed business functionality, are only becoming reality if reuse of the services is improved and the business can rely on the quality of the IT functionality delivered. Guaranteeing and delivering non-functional requirements over time increases trust. Allowing non-functional selection among many services that deliver the same functionality in a transparent way could potentially even strengthen the quality of the service portfolio via competition between the service providers.

When selecting web services to perform certain business functionality, often only hard constraints are considered, e.g., response time should be lower than 100ms. However, in reality, client requirements over QoS (Quality of Service) or other NFP (Non-Functional Property) types are often soft and allow tradeoffs. For example, a client may wish for short response time, but may be willing to temporize if another service is much cheaper. Or she may be willing to allow that, but only in certain contexts. A non-trivial set of requirements for the tradeoffs can exist.

A simple way to implement optimization over NFP configurations is for the user to specify hard constraints over NFPs, get a list of service configurations that match, and then select among them manually. However, this scheme is undesirable for several reasons. First, the number of possible configurations may be large, making manual selection of unranked configuration a bad idea. Second, the inverse may be true, the client can define constraints which are too restrictive, and get no candidates. Although repeating the cycle several times can result in a reasonable selection, this process is undesirable.

Specification of QoS characteristics is an important topic in the area of IT systems. The existing standards can be grouped according to their main focus: software design/process description e.g. UML (Unified Modeling Language) Profile for QoS and QML (Query Markup Language) - QoS Modeling Language [7], service/component description e.g. WS (Web Service) Policy, and SLA-centric (Service Level Agreement) approaches, e.g. WSLA (Web Service Level Agreements [11]), WSOL (Web Service Offerings Language) [15], SLAng (Service Level Agreement definition language) [10] and WS-Agreement [1]. The SLA-centric approaches usually are based on a provider-consumer scenario. They consider SLA negotiation, specification, and SLA management.

A common way of performing QoS-aware matching is a two-step approach of functional and non-functional matching as proposed by METEOR-S, Gronmo and Jaeger [8] or in "Semantic WS-Agreement Partner Selection" [13]. Maximilien et. al. use an agent-based system [12]. Tian proposes WS-QoS, a comprehensive framework for considering QoS in SOA by extending UDDI (Universal Description, Discovery and Integration) and WSDL (web services description language) [14]. In addition to looking at existing work, in [6] Dobson derives the requirements for a QoS concept in SOA: extensibility, XML (extensible Markup Language), complex specifications, failure, non-compliance, and integration into environment.

There exists a considerable body of work for representing constraints, preferences, and utilities. Languages for representing constraints have been around for a long time. In particular, constraint networks [16] are a well-known scheme for graphically representing constraints. In recent years, these have been generalized to weighted constraints and to soft constraints. The latter bear some similarity to TCP (Tradeoff-enhanced Conditional Preference) networks [3]. Representations for qualitative preferences have also been researched, but the first graphical model for such has been the CP-networks model [4] a precursor of TCP-networks. The TCP networks are also closely related to UCP (Utility Conditional Preference) networks, while UCP networks can be seen as a graphical notational variant of a generalized form of a generalized version of additive utility functions known as GAI (Generalized Additive Utility) functions [2].

It is therefore a purpose of the present invention to provide an improved method for the selection of services for business processes and software systems considering hard constraints, soft constraints, and tradeoffs.

Further purposes and advantages of this invention will appear as the description proceeds.

### Summary of the Invention

The invention is a method for optimizing a business or software activity in service-oriented architecture. The method provides a match between the required functionality and that provided by a web service (or other service) while taking into account client requirements and allowing tradeoffs. The method comprises the steps of: specifying a user's preferences over the service configuration using a structural representation and optimizing the service configuration according to the representation.

The method of the invention uses a graphical language for specifying hard constraints, preferences and tradeoffs over NFPs as well as service level objectives. In particular, the method uses the TCP and UCP network formalisms to allow for a simple yet very flexible specification of hard constraints, preferences, and tradeoffs over these properties. Algorithms for selecting web services according to the hard constraints as well as for optimizing the selected web service and for configuration according to the specification are described.

In embodiments of the method of the invention the services provided by the service oriented architecture are web services.

In embodiments of the method of the invention the structural representation can be one of the following:
a) preferences representation;
b) utilities representation; or
c) preferences and utilities representation.

In embodiments of the invention the utilities representation is realized by using UCP (Utility ConditionalPreferences) networks.

In embodiments of the invention the preferences representation is realized by using TCP (Tradeoff-enhanced Conditional Preferences) networks.

In embodiments of the invention the preferences representation is realized by using TCP (Tradeoff-enhanced Conditional Preferences) networks and the optimization is realized by using a TCP ranking algorithm.

In embodiments of the invention the structural representation is characterized by the use of service classes for categorization of the NFP attributes.

All the above and other characteristics and advantages of the invention will be further understood through the following illustrative and non-limitative description of preferred embodiments thereof, with reference to the appended drawings.

### Brief Description of the Drawings

- Fig. 1 illustrates the TCP tables and network for a TCP net describing a traveler's preference over the flight options to a conference in the USA, from Berlin;
- Fig. 2 shows the UCP tables and a network for an example UCP network, specifying utilities similar (though not equivalent) to the TCP network version of Fig. 1;
- Fig. 3 provides an overview of an overall system in which an embodiment of the present invention is used;
- Fig. 4 shows the structure of an SLO (Service Level Objectives) offering/requirement and example SLO offering for the service class "Gold" regarding the NFP "ResponseTime";
- Fig. 5 is an extract of a table showing NFPs, service classes, and default values;
- Fig. 6 shows an example of preferences over NFPs using TCP-net; and
- Fig. 7 shows the GUI (Graphical User Interface) that was used for the SLO offerings definition on the service provider side and for the SLO requirements definition on the service consumer side.

### Detailed Description of Preferred Embodiments

In order to implement a business or software activity in SOA (Service-Oriented Architecture), the present invention uses a graphical language for specifying hard constraints, preferences and tradeoffs over NFPs as well as SLO (Service Level Objectives). In particular, the TCP and UCP network formalisms are used to allow for a simple yet very flexible specification of hard constraints, preferences, and tradeoffs over these properties. Algorithms for selecting services according to the hard constraints as well as for optimizing the selected service and for configuration according to the specification were developed as part of the invention.

In a service-oriented architecture, business processes and software systems are built out of orchestrated business or software activities. The present invention is a part of such a system, and each service integration process involves matching and optimization with respect to more than one activity and web service. Since the configuration process is part of a larger process, involving intermediate agents, it is even more important to have as few repeated cycles of constraint redefinition and selection. It is better if the tradeoff can be specified formally, and an automated ranking or selection can be made in a single pass.

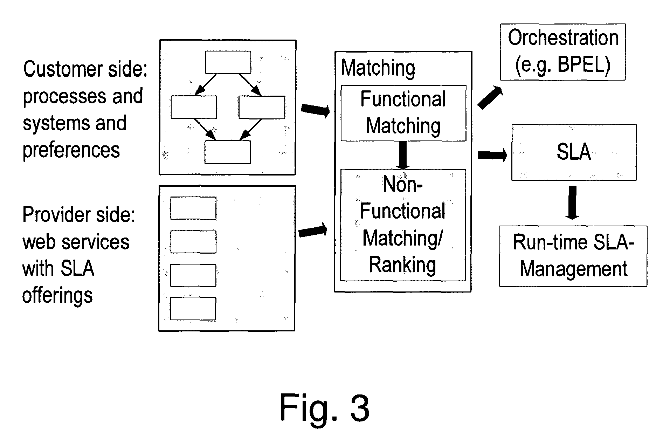

One embodiment of the present invention is part of an implemented system for semi-automatically creating orchestrated mechanisms of web services. The overall system configures the web services based on business processes described in a formal business process description language such as BPMN, partly described in Fig. 3. In the system, activities in the business process are matched to the web service offerings that implement these activities. The part described by the present invention (shaded in the figure), is the part responsible for optimizing the NFPs among all possible configurations that have passed the functional matching.

In the invention a graphical language is used for specifying hard constraints, preferences and tradeoffs over NFPs and SLO's. In particular, the TCP and UCP network formalisms are used to allow for a simple yet very flexible specification of both hard constraints, preferences, and trade offs over these properties. Algorithms for selecting web services according to the hard constraints as well as for optimizing the selected web service and for configuration according to the specification have been developed. The scheme has been implemented as part of a system for web service integration.

Building blocks of the concept are: methods describing the general sequence of the steps to be performed, how the SLOs and preferences are modeled, and what algorithms can be used for ranking the services from a non-functional point of view. The preference and NFP-based approach of finding services for business process steps respectively software system functionality are expected by the inventors to yield better matching results than the existing algorithms respectively and that there are cases in which the approach of the invention incurs less overall effort than the manual selection of the services. In order to prove that the concept of the invention works, a prototype has been developed and test scenarios have been performed.

One significant issue addressed by the invention is how to represent preferences and utilities compactly, in a manner convenient to a user. Numerous such schemes exist and are briefly discussed herein. Of these models, the invention uses both TCP networks [5] (for representation of qualitative preferences) and a simplified version of UCP networks [4] (for a compact representation of utility functions). The challenge is how to compactly and intuitively represent preferences or utilities of a set of outcomes, each being an assignment of values to a set of variables. Note that the set of outcomes is exponential in the number of variables, but these networks handle this challenge well.

### TCP networks

TCP networks are illustrated through an example of selecting a flight, the variables may be *Airline, Departure time, Stop-over, Ticket class* etc., where *Airline* has the domain {*British Airways, KLM,...*}*, Departure time* has the domain {*morning, noon, evening, night},* etc. Each complete assignment to the set of variables specifies an outcome - a particular flight configuration.

The representation is compact due to an assumed preferential independence: in this flights example, the client may assess *Airline* to be preferentially independent of *Departure time.* This could be the case if the user always prefers to fly British independent of the departure time. As preferential independence is usually too strong a property, a notion of conditional preferential independence is also used. For example, the user may assess *ticket class* to be independent of all other features given *Airline.* That is, he always prefers business class given that this is a KLM flight, but prefers economy class if this is a British Airways flight.

In many typical scenarios, there are auxiliary or user constraints that prevent implementation of the method from providing the user with the most preferred (unconstrained) outcome. A simple and common example is that certain flight combination may be unavailable, e.g. there may be no business class KLM flights to the USA in the morning. In such cases, it is important to know which attributes the user cares about more strongly, and to try to maintain good values for these attributes, compromising on the others.

In this flights example, suppose that the attributes *Stop-overs* and *Ticket class* are mutually preferentially independent. We might say that *Ticket class* is more important than *Stop-overs,* e.g, because we would rather temporize and have to wait some time in the airport, as long as we can get a good sleep on the flight due to our business class seat.

Relative importance can be refined naturally to a notion of *conditional relative importance.* For instance, suppose that the relative importance of *Ticket class* and *Stop-overs* depends on departure time (see detailed example below).

The TCP-net (Tradeoff-enhanced Conditional Preference-net) model is a graphical model that encodes conditional relative importance statements, as well as the conditional preference statements. Each node X in a TCP net stands for a variable, and is annotated with a CPT (Conditional Preference Table). The graph has three types of arcs: directed conditional preference edges, "strongly directed" importance arcs (i-arcs), and undirected conditional importance arcs (ci-arcs). The CPT for a variable X associates preferences over D(X) for every possible value assignment to the parents of X (denoted Pa(X)), where only preference arcs are considered in determining Pa(X).

In addition, in TCP-nets, each undirected arc is annotated with a CIT (Conditional Importance Table). The CIT associated with such an arc (X,Y) describes the relative importance of X and Y given the value of the corresponding importance-conditioning variables Z.

### Example 1

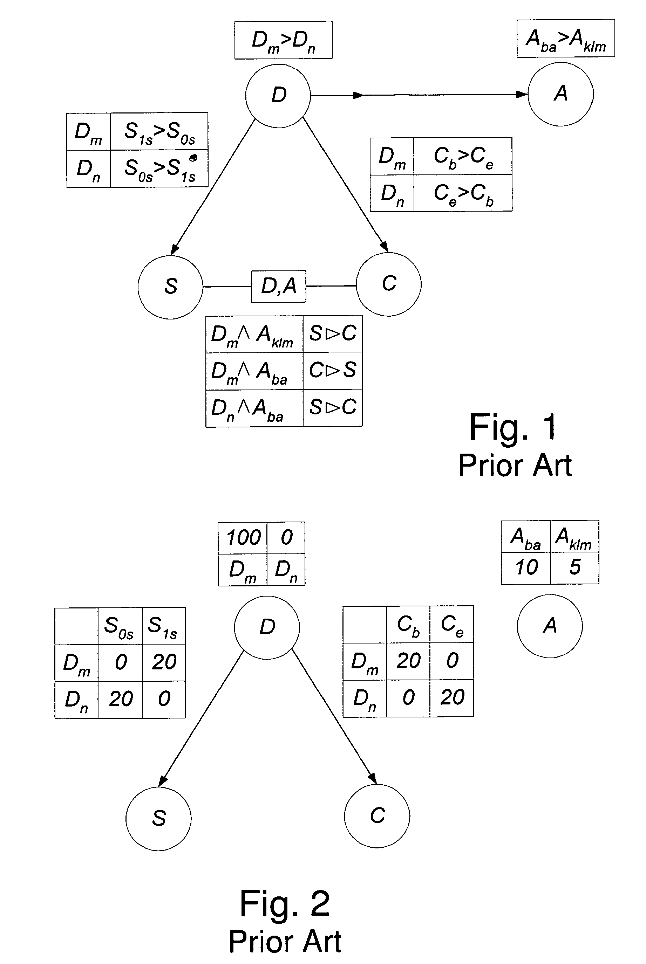

The first example is TCP-net portraying a flight to the USA. Fig. 1 illustrates the tables and network respectively for a TCP net, describing a traveler's preference over the flight options to a conference in the USA, from Berlin.

Four flight parameters (variables) are considered:
Airline The variable A represents the airline. The TCP table adjacent to node A in the figure shows that the traveler prefers to fly with British Airways (*A_{ba}*) than with KLM (*Aₖₗₘ*).
Departure Time The variable D distinguishes between morning/noon (*Dₘ*) and evening/night (*Dₙ*) flights. The TCP table abovenode D shows that the traveler prefers a morning/noon flight, because he would like to have a few hours before the conference opening in order to rest at the hotel.
Stop-over The variable S distinguishes between direct (*Sos*) and indirect (*S₁ₛ*) flights, respectively. On day flights the traveler is awake most of the time and, being a smoker, prefers a stop-over in Europe. However, on night flights he sleeps, leading to a preference for direct flights, since they are shorter. These preferences are shown in the TCP table above node S.
Ticket Class The variable C stands for ticket class. On a night flight, the traveler prefers to sit in economy class (Ce), while on a day flight he prefers to pay for a seat in business class (*C_{b}*). These preferences are shown in the TCP table above node C.

The TCP-net in Fig. 1 captures all of these preference statements and the underlying preferential dependencies, as well as the relative importance relations between some parameters of the flight. First, there is an i-arc from D to A, because getting more suitable flying time is more important to the traveler than getting the preferred airline. Second, there is a ci-arc between S and C, where the relative importance of S and C depends on the values of D and A (note that for clarity, the ci-arc in Fig. 1 is schematically labeled with its importance-conditioning variables D and A) All of the different possibilities for the ci-arc are shown in the TCP table between nodes S and C. These possibilities are:
1. On a KLM day flight, an intermediate stop in Amsterdam is more important to the traveler than flying business class.
2. On a British Airways day flight, business class is more important to the traveler than having a short intermediate break.
3. For a British Airways night flight, the fact that the flight is direct is more important to the traveler than getting a cheaper economy seat.

The semantics of a TCP-net is straightforward, and is defined in terms of the set of strict partial orders consistent with the set of constraints imposed by the preference and importance information captured by this TCP-net. An exact definition of the semantics can be found in reference [4].

In the above example, the TCP net semantics imply that the most preferred outcome is: morning/noon flight, 1 stop-over, business, and flying BA. The next- best outcome is the same as above, except with no stop-overs, etc. A simple top-down backtracking algorithm (to be described herein below) can be used to enumerate outcomes in order of non-increasing desirability.

### UCP Networks

Although in many cases qualitative preferences are sufficient, there are still cases where a user might wish to specify quantitative values, i.e. utilities. However, rather than having to specify an exponential number of utilities (one for each possible outcome), one can use the structure of the preferential dependencies used in TCP nets to compactly specify the utilities. Consider a TCP network with just the conditional preference arcs (i.e. without importance or conditional importance arcs). Now, if the conditional preference tables (CPT) are replaced by similar tables that contain utility values, i.e. conditional utility tables (CUT) instead of orderings, we obtain the compact representation of utility functions known as (simplified) UCP networks. (The actual formal definition of UCP networks in [4] is rather more complicated and has requirements for preserving importance semantics, which are ignored herein, hence the term "simplified".)

Fig. 2 shows UCP tables and a network for an example UCP network, specifying utilities similar (though not equivalent) to the TCP network version of example 1. It is evident that such a network is roughly as easy to specify as the respective TCP network. Its semantics is rather simple: given an outcome, its utility is the sum of the utilities for each attribute values as specified by the utility tables.

Observe that importance tradeoffs can be enforced in UCP networks by having larger value differences in tables for the more important variables. In this example, the highest-utility flight configuration would be a morning/noon flight (100) by British Airways (10), 1-stop (20), business class (20) for a total utility of 150. The 2nd best would be the same, configuration, except flying with KLM.

Fig. 3 provides an overview of the overall system in which the present invention is used. In the figure, the blocks with the grey background represent the part of the present invention in the entire system. The provider describes the capabilities of its service using the SLO structures, and combines them to SLA offerings of a certain service class. The customer describes his SLA and preferences. After finding the functional matches, the NFP matching algorithm will find whether the service with its service class given its SLO capabilities complies with the SLO requirements and then ranks the services according to the preferences specified by the customer.

Once the final service selection has been performed either automatically or by a human, the SLA gets constructed out of the information from the SLA offering of the selected service class of the service. This SLA can then be used to monitor run-time compliance of the service.

### Provider-side description

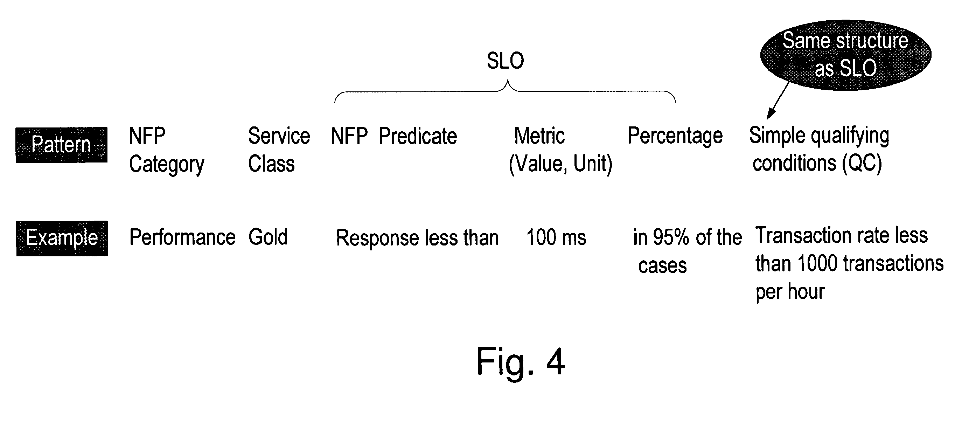

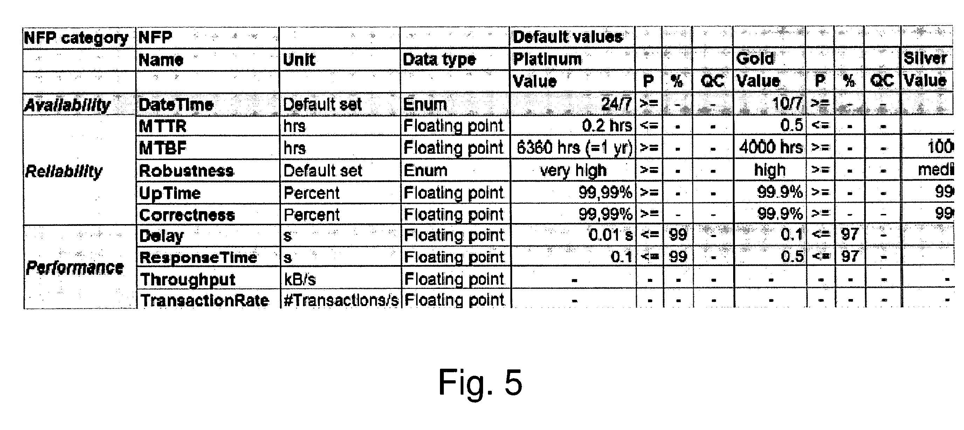

On the service provider side the service capabilities are described using SLA offerings. An SLA offering contains a set of SLO offerings that state conditions over NFPs. The structure of the SLO offerings has been limited as depicted in Fig. 4 to reflect the realistic need for NFP annotation and to limit the effort for the business analyst as well as the provider who has to provide the SLO information. Another reason is that with a limited structure, chances for matches between offerings and requirements are higher and matches are easier to find (in terms of computation time). Fig. 4 also contains an example for a ResponseTime SLO offering for the service class "Gold": "ResponseTime is guaranteed to be less than 100ms in 95% of the cases if the TransactionRate caused by the customer is lower than 1000 per hour." The NFPs that can be used are defined in an extensible NFP ontology, formalized in XML, since customer and provider need to talk the same language. An extract form the initial list of NFPs is depicted in Fig. 5. Further categories and NFPs are: Security (Authentication, Authorization, Encryption, Integrity, NonRepudiation), Cultural (Language), Legals (SOXCompliance, BafinCompliance, BaselIICompliance), Organizational (PartnerList), Service Usage (GUISimplicity, InputFlexibility, OutputFlexibility), Trust( Customer Rating, Experience, Membership), and Price. This list is extendible. To lower the effort of defining SLAs on the consumer and provider side, there are default values for the service classes that can be overwritten in the GUI. The SLA offering regarding one service at a certain service class is the basis for the SLA between provider and customer that gets monitored during runtime.

### Consumer-side description

The consumer describes his service level requirements and preferences. The service level requirements for one software component consist of several SLO requirements. Preferences can be expressed on these SLOs or on specific values of NFPs directly. The SLO requirements used on the service consumer side have the same structure and formalization as the ones on the provider-side. Yet, there is one difference. While the service provider can define several service classes with different capabilities for one service or operation, the service consumer expresses a set of requirements plus the preferences. An example SLO requirement is: "Response Time (RT) should be less than 100ms in 95% of the cases under if Transaction-Rate (TR) caused by the customer is lower than 1000 per hour." Using the SLO inside an SLO node of the preference model allows for richer expression of the needs of the customer.

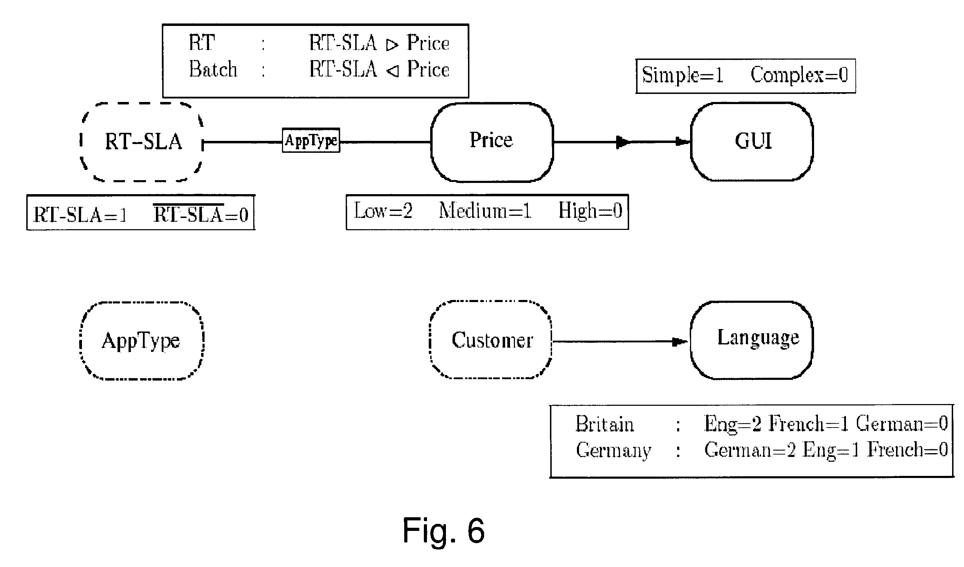

Either TCP or UCP networks (depending on whether the user wishes to specify qualitative or quantitative preferences) can be used in the system of the invention to represent both hard constraints and preferences (or utilities) over non-functional properties and over SLO statements. Regular TCP (resp. UCP) network node encodes some property over which preferences are expressed (resp. utilities). In addition, special nodes are added that can allow context to be expressed. Thus, there are three types of nodes (see Fig. 6):
1. SLO nodes (dashed ovals in the figure). These have binary domain, and each stands for a previously defined SLO. A value of "true" would signify that a web service configuration can support the SLO statement.
2. Normal NFP nodes (solid ovals). These have arbitrary domain, depending on the NFP type. For example, an "Interface Language" node would have all possible interface languages in its domain.
3. Auxiliary nodes (dotted ovals). These represent auxiliary variables, usually for allowing dependence on arbitrary context, rather than NFPs.

Rather than provide preference over domain values, the CPTs contain numbers, where a higher value stands for a more preferred value. For example, preference over the interface language NFP (Language node in Fig. 6) depends on the auxiliary variable "customer nationality" (Customer node in the figure). The values in the first row state that for British customers, English is the most preferred interface language for the web service. The strongly directed edge between Price and GUI means that the client prefers a better price to a better GUI. Finally, the undirected (interrupted) edge between RT-SLA and Price (with the auxiliary AppType variable as a conditioning variable) means that meeting the RT-SLA is more important than price if the application type is real-time otherwise price is the more important attribute. Using the TCPnet semantics, the best web service configuration (if available), for a real-time application and a German client, would be that the RT-SLA be met, that the price be low, a simple GUI, and German as an interface language. If the only low-priced service available does not meet the RT-SLA, the next-best configuration would be a higher priced configuration that does. However, for a non-RT application, the customer would prefer a configuration that does not meet the RT-SLA as long as the price is low.

Using numbers in the table allow both utilities and hard constraints to be represented with no change to the system. A value of -∞ denotes a value completely disallowed. To represent quantitative preferences, the numbers are simply treated as utility values by the ranking algorithms (see herein below).

### Matching Algorithms

After specification of both the functional and non-functional requirements (including preferences), a matching algorithm attempts to find the best match (both web service operation and its configuration) to perform the activity. In the system of the invention the functional match is first performed, resulting in a list of web service operation configuration candidates. The goal is now to filter and rank the configurations according to constraints and preferences over the non-functional properties. Although both TCP and UCP networks use the same interface for defining the network, due to the different semantics of the networks, each type of network requires a different optimization algorithm.

### UCP Ranking

The UCP ranking algorithm simply finds the utility value of each web service configuration offered, and sorts the services according to utility values, discarding any with a infinitely negative utility. Since only conditional preference edges (CP) are important, all other edges are dropped.
1. Drop all edges except CP ones.
2. For each WS configuration calculate its UCP value
3. Sort all the WS configurations according to their UCP values

### TCP Ranking

The TCP ranking algorithm is a top-down (according to a topological ordering) backtracking algorithm over web service configurations. Pruning is achieved if at a certain branch no web service configuration consistent with the current partial variable instantiation exists in the web service offering list.

### Testing the compliance of SLA nodes

Part of the above mentioned algorithms is to find out, whether the service considered would fulfill the SLO requirements mentioned in the SLO nodes. For this, each statement in the SLO node of the preference model is tested with a simple algorithm that directly compares the predicate and values (enumerated and free ones) as well as the qualifying condition of the SLO offering and SLO requirement referring to the same NFP.

### Implementation

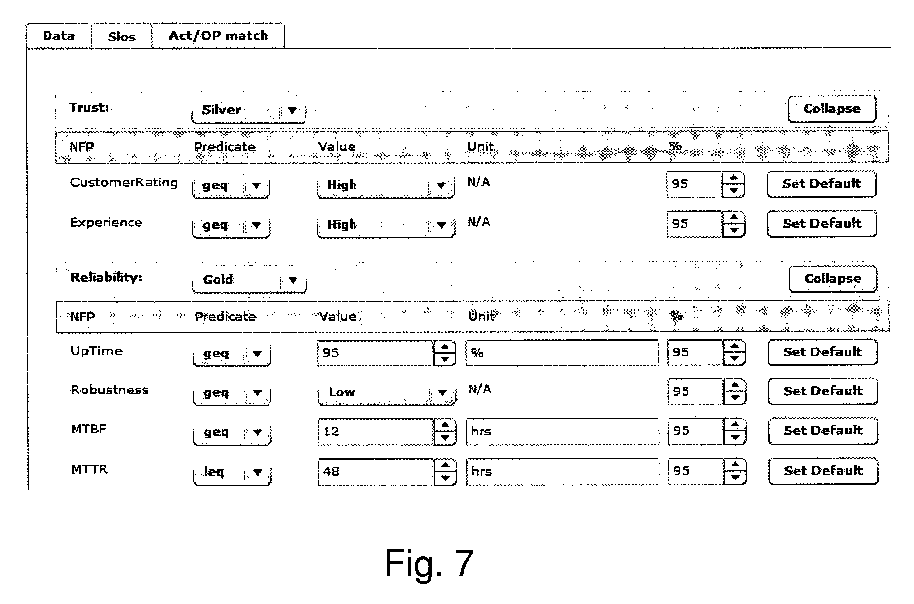

The invention has been tested in a prototype that consists of the following components: service repository (XML based on NFP XSDs), SLA definition tool (Portal application), preference modeling tool (Java), functional matcher (not part of the NFP concept), and non functional matching and ranking component with SLA definition capability. Fig. 7 shows the GUI that was used for the SLO offerings definition on the service provider side and for the SLO requirements definition on the service consumer side.

Although embodiments of the invention have been described by way of illustration, it will be understood that the invention may be carried out with many variations, modifications, and adaptations, without exceeding the scope of the claims.

### List of Abbreviations

- CIT: Conditional Importance Table
- CP: Conditional Preference edges
- CPT: Conditional Preference Table
- CUT: Conditional Utility Table
- GAI: General Additive Utility
- GUI: Graphical User Interface
- IT: Information Technology
- NFP: Non-Functional Property
- QML: Query Markup Language
- QoS: Quality of Service
- RT: Response Time
- SLA: Service Level Agreement
- SLAng: Service Level Agreement definition language
- SLO: Service Level Objectives
- SOA: Service-Oriented Architecture
- TCP: Tradeoff-enhanced Conditional Preference
- TR: Transaction Rate
- UCP: Utility Conditional Preference
- UDDI: Universal Description, Discovery and Integration
- UML: Unified Modeling Language
- WS: Web Service
- WSLA: Web Service Level Agreement
- WSOL: Web Service Offerings Language
- XML: eXtensible Markup Language
- XSD: XML Schema Definitions

### Bibliography

1. Alain Andrieux, Karl Czajkowski, Asit Dan, Kate Keahey, Heiko Ludwig, Jim Pruyne, John Rofrano, Steve Tuecke, and Ming Xu. Web services agreement specification (ws-agreement), 2005.
2. F. Bacchus and A. Grove. Graphical models for preference and utility. In UAI'95, pages 3-10, San Francisco, CA, 1995. Morgan Kaufmann Publishers.
3. S. Bistarelli, H. Fargier, U. Montanari, F. Rossi, T. Schiex, and G. Verfaillie. Semiring-based CSPs and valued CSPs: Frameworks, properties, and comparison. C'onstraints, 4(3):275-316, September 1999.
4. C. Boutilier, F. Bacchus, and R. I. Brafman. UCP-networks: A directed graphical representation of conditional utilities. In Proceedings of Seventeenth Conference on Uncertainty in Artificial Intelligence, pages 56-64, 2001.
5. R. I. Brafman, C. Domshlak, and S. E. Shimony. On graphical modeling of preference and importance. Journal of Al Research, 25:389-424, 2006.
6. Glen Dobson. Quality of service in service-oriented architectures. Dependability Infrastructure for Grid Services Project, 2004.
7. Svend Frolund and Jan Koistinen. Quality of service specification in distributed object systems design, 1998. QML of HP Laboratories, 1998.
8. R. Grønmo and M. C. Jaeger. Model-driven methodology for building qosoptimised web service compositions. The 5th IFIP International Conference on Distributed Applications and Interoperable Systems (DAIS)*.*
9. A. R. Hevner, S. T. March, J. Park, and S. Ram. Design science in information system research. MIS Quarterly, 2004.
10. D. Davide Lamanna, James Skene, and Wolfgang Emmerich. Slang: A language for defining service level agreements, 2003.
11. Heiko Ludwig, Alexander Keller, Asit Dan, Richard P. King, and Richard Franck. Web services level agreement (wsla) language specification, 2003.
12. E. Michael Maximilien and Munindar P. Singh. A framework and ontology for dynamic web services selection. IEEE Internet Computing, 08(05):84-93, 2004.
13. Nicole Oldham, Kunal Verma, Amit Sheth, and Farshad Hakimpour. Seinantic ws-agreement partner selection. In International World Wide Web Conerence Committee (IWSC2), Edinburgh, Scotland, 2006. ACM.
14. Min Tian. QoS integration in Web services with the WS-QoS framework. PhD thesis, Freie Universitt Berlin, 2005.
15. Vladimir Tosic, Kruti Patel, and Bernard Pagurek. Wsol - web service offerings language. In at al. Bussler, Christoph, editor, CAiSE'02 Proceedings of the Workshop on Web Services, e-Business, and the Semantic Web - WES, pages 57-67, 2002.
16. H. Tsang. Foundations of Constraint Satisfaction. Academic Press, 1993.

## Claims

1. A method for optimizing a business or software activity in service-oriented architecture, said method providing a match between the required functionality and that provided by said service while taking into account client requirements and allowing tradeoffs, said method comprising the steps of:
a) specifying a user's preferences over service configuration using a structural representation; and
b) optimizing said service configuration according to said representation.

2. A method according to claim 1, wherein the services provided by the service oriented architecture are web services.

3. A method according to claim 1, wherein the structural representation is one of the following:
a) preferences representation;
b) utilities representation; or
c) preferences and utilities representation.

4. A method according to claim 3, wherein the utilities representation is realized by using UCP (Utility ConditionalPreferences) networks.

5. A method according to claim 3, wherein the preferences representation is realized by using TCP (Tradeoff-enhanced Conditional Preferences) networks.

6. A method according to claim 5, wherein optimization is realized by using a TCP ranking algorithm.

7. A method according to claim 1, wherein the structural representation is **characterized by** the use of service classes for categorization of the NFP attributes.
